# EUROPÄISCHE PATENTSCHRIFT

(11) **EP 3 649 038 B1**
(45) Veröffentlichungstag und Bekanntmachung des Hinweises auf die Patenterteilung: **10.11.2021**
(21) Anmeldenummer: 18733563.3
(22) Anmeldetag: 20.06.2018
(51) Int. Cl.: B62D 7/14, B60G 7/00, F16H 25/20, B62D 5/04

(54) **VERSTELLEINRICHTUNG FÜR EIN FAHRWERK EINES KRAFTFAHRZEUGES SOWIE HINTERACHSLENKUNG**
ADJUSTING DEVICE FOR A CHASSIS OF A MOTOR VEHICLE AND REAR-AXLE STEERING SYSTEM
DISPOSITIF DE RÉGLAGE POUR UN CHÂSSIS DE VÉHICULE À MOTEUR, ET DIRECTION D'ESSIEU ARRIÈRE

(30) Priorität: 07.07.2017 DE 102017211672
(43) Veröffentlichungstag der Anmeldung: 13.05.2020
(73) Patentinhaber: ZF Friedrichshafen AG, 88046 Friedrichshafen (DE)
(72) Erfinder: SPIEGELBERG, Jochen, 49143 Bissendorf (DE); MARONCELLI, Marc, 88046 Friedrichshafen (DE); BÖKELHEIDE, Sören, 32549 Bad Oeynhausen (DE); NIEBERDING, Carina, 49451 Holdorf (DE); ROTARY, Mark, 88046 Friedrichshafen (DE)
(74) Vertreter: ZF Friedrichshafen AG
(86) Internationale Anmeldenummer: PCT/EP2018/066334
(87) Internationale Veröffentlichungsnummer: WO 2019/007683

(56) Entgegenhaltungen:
- EP-A1- 2 452 842
- DE-A1-102015 219 198
- DE-A1-102015 224 775

## Beschreibung

Die Erfindung betrifft eine Verstelleinrichtung für ein Fahrwerk eines Kraftfahrzeuges nach dem Oberbegriff des Patentanspruches 1 sowie eine Hinterachslenkung.

Durch die DE 10 2008 021 861 A1 wurde ein Aktuator für ein Fahrwerk eines Kraftfahrzeuges bekannt, wobei der Aktuator einen elektromotorisch antreibbaren Spindelantrieb mit einer axial verschiebbaren Spindel aufweist, welche mit ihrem äußeren Ende an einem beweglichen Fahrwerksteil, insbesondere einem Lenker angelenkt ist. Der Aktuator weist ein Gehäuse auf, welches fahrwerkseitig über ein Lager abgestützt ist. Bei Aktivierung des Aktuators über den Elektromotor wird die Spindel in ihrer Längsrichtung verschoben und bewirkt damit eine Verstellung des Fahrwerkslenkers.

Für die Hinterachslenkung eines Kraftfahrzeuges ist es aus der DE 10 2015 224 775 A1 oder DE 10 2015 219 198 A1 bekannt, dass entweder zwei separate Aktuatoren, d. h. ein Aktuator für jedes Hinterrad oder nur ein zentral angeordneter Aktuator, welcher auf beide Hinterräder wirkt, verbaut werden. Derartige Aktuatoren sind - je nach Einsatzzweck - in verschiedenen Größen verfügbar. Ein Problem kann sich dann ergeben, wenn die verfügbaren Aktuatoren, kurz auch Steller genannt, bei speziellen Einbauverhältnissen im Fahrzeug nicht verwendbar sind. Eine Neukonstruktion, angepasst an die speziellen Einbauverhältnisse im Fahrzeug, ist in der Regel zu kostenaufwendig.

Eine Aufgabe der vorliegenden Erfindung besteht darin, einen vorhandenen Aktuator an die speziellen Einbauverhältnisse im Fahrzeug anzupassen.

Die Erfindung umfasst die Merkmale des Patentanspruches 1. Vorteilhafte Ausgestaltungen ergeben sich aus den Unteransprüchen.

Erfindungsgemäß ist vorgesehen, dass die Spindel des Aktuators mittels eines Verlängerungsstückes in axialer Richtung verlängert ist, wobei am äußeren Ende des Verlängerungsstückes das fahrwerkseitige Verbindungsglied, beispielsweise eine Gelenkgabel zur Verbindung mit einem Radträger zum Lenken eines Rades, angeordnet ist. Durch die Verlängerung der Spindel wird der Vorteil erreicht, dass ein handelsüblicher oder serienmäßig vorhandener Aktuator an den vorgegebenen Abstand zwischen fahrzeugseitigem Abstützpunkt und fahrwerksseitigem Anlenkpunkt angepasst wird. Somit ist keine Neukonstruktion des Aktuators für die speziellen Einbauverhältnisse erforderlich, wodurch Kosten gespart werden. Die Verlängerung der Spindel, insbesondere durch ein Verlängerungsstück, kann einfach nachgerüstet werden. Das Verlängerungsstück ist ein separates Bauteil, welches formschlüssig oder kraftschlüssig z.B. mittels Verschraubung mit der Spindel, vorzugsweise dessen Ende, verbindbar ist.

Das Verlängerungsstück ist fahrzeugseitig, insbesondere fahrwerkseitig abstützbar ausgebildet bzw. wird am Fahrwerk abgestützt. Aufgrund der Anbindung des Verlängerungsstücks an einen Fahrwerkslenker oder Radträger treten Querkräfte und Biegemomente auf, welche zu einer erhöhten Beanspruchung des Verlängerungsstückes oder zu einem Knicken desselben führen können. Diese Kräfte und Momente werden durch die Abstützung am Fahrzeug abgefangen. Mit anderen Worten erfolgt die Abstützung am Fahrzeugaufbau bzw. an Hilfsbauteilen, die am Fahrzeugaufbau bzw. der Karosserie befestigt sind. Hierzu kann in dem Bereich des Verlängerungsstücks ein Führungselement vorgesehen werden, welches das Verlängerungsstück umgreift. Das Führungselement ist am Fahrzeug, z.B. an der Karosserie oder am Fahrwerk, z.B. am Fahrschemel, Achsträger, Hilfsrahmen (oder weiteren Fahrzeug-oder Fahrwerksbauteilen) abstützbar.

Nach einer alternativen Ausführungsform ist das Verlängerungsstück einstückig mit der Spindel ausgebildet, d. h. die Spindel selbst ist verlängert. In diesem Falle müsste lediglich die bestehende Spindel durch eine neue, angepasste Spindel ersetz werden, die die erforderliche Länge aufweist. Je nach erforderlicher Länge ist so sehr leicht eine kostengünstige Anpassung eines vorhandenen Aktuators ermöglicht.

Nach einer weiteren bevorzugten Ausführungsform ist das Verlängerungsstück über ein Gleit- oder Schublager abgestützt. Das Verlängerungsstück, welches vorzugsweise zylindrisch ausgebildet ist, wird durch das Gleit- oder Schublager geführt und in radialer Richtung, d. h. quer zur Längsachse darin abgestützt. Alternativ zur zylindrischen Ausbildung kann das Verlängerungsstück auch eine polygonale Umfangsform aufweisen. Das Gleit- oder Schublager ist in dem Fall an dessen Innenkontur ebenfalls polygonal ausgebildet, so dass das Verlängerungsstück verdrehfest in dem Lager gleiten kann.

Nach einer weiteren bevorzugten Ausführungsform ist das Gleit- oder Schublager innerhalb eines Lagerbockes angeordnet, der seinerseits am Fahrzeug, insbesondere an dessen Karosserie oder einem Hilfsrahmen befestigt ist. Damit sind das Verlängerungsstück und somit auch die Spindel über einen hinreichend langen Abschnitt geführt, wobei vorzugsweise zwei Gleitlager, jeweils eins an den Enden des Lagerbocks, vorgesehen sind. Ein Knicken des Verlängerungsstückes aufgrund der bei einer Radführung auftretenden hohen Kräfte wird damit wirkungsvoll vermieden.

Nach einer weiteren bevorzugten Ausführungsform ist das Verlängerungsstück lösbar oder unlösbar mit der Spindel verbunden, vorzugsweise durch eine stirnseitige Verschraubung, wobei das Verlängerungsstück stirnseitig einen Gewindezapfen aufweisen kann, welcher in eine stirnseitig in der Spindel angeordnete Gewindebohrung einschraubbar ist. Möglich ist auch eine Verpressung oder Verschweißung beider Teile. Damit ergibt sich der Vorteil, dass das Verlängerungsstück einfach an einem bestehenden Aktuator nachgerüstet werden kann. Die derart verlängerte Spindel ist zudem für die bei einer Radführung auftretenden hohen Kräfte geeignet.

Nach einer weiteren bevorzugten Ausführungsform kann das Gleit- oder Schublager einstückig mit dem Gehäuse des Aktuators ausgebildet werden, wobei das Gehäuse im Bereich der Verlängerung fahrzeugseitig abstützbar ist, damit die vom Fahrwerkslenker auf das Verlängerungsstück wirkenden Kräfte und Momente abgefangen werden und ein Ausknicken vermieden wird.

Nach einer weiteren bevorzugten Ausführungsform weist das Fahrwerk einen Spurlenker oder einen Radträger auf, welcher mit dem Verbindungsteil des Aktuators gelenkig verbunden ist. Damit ist der Aktuator für eine Hinterachslenkung eines Fahrzeuges verwendbar.

Die Verstelleinrichtung selbst ist als ein Radführungsbauteil zu verstehen, welches wie ein Zweipunktlenker ausgebildet ist, der jedoch in seiner Länge verstellbar ist. Durch die Verstellbarkeit der Länge kann durch die Abstützung des einen Endes der Verstelleinrichtung an der Karosserie eine Lenkbewegung auf einen Radträger oder Spurlenker erreicht werden, wenn das andere Ende mit diesen Bauteilen verbunden ist. Auch kann eine solche Verstelleinrichtung genutzt werden, um statt der Spur den Sturz eines Rades gegenüber Karosserie oder des Fahrwerks zu ändern.

Die Erfindung betrifft des Weiteren eine steer-by-wire-Lenkung, insbesondere eine Hinterachslenkung mit einer Verstelleinrichtung gemäß den zuvor beschriebenen Ausführungen. Steer-by-wire-Lenkungen sind nicht mechanisch mit einer Lenkhandhabe gekoppelt. Sie werden durch Steuersignale in Abhängigkeit von Parametern wie Lenkwinkel an den Rädern der Fahrzeugachsen und Lenkhandhabe, Fahrzeuggeschwindigkeit und Fahrzeugbeschleunigung etc. gesteuert.

Ein Ausführungsbeispiel der Erfindung ist in der Zeichnung dargestellt und wird im Folgenden näher beschrieben, wobei sich aus der Beschreibung und/oder der Zeichnung weitere Merkmale und/oder Vorteile ergeben können. Es zeigen
- Fig. 1: eine perspektivische Darstellung einer Verstelleinrichtung mit Aktuator und Lagerbock und
- Fig. 2: die Verstelleinrichtung, teils in einer Ansicht und teils als Schnitt im Bereich des Lagerbocks.

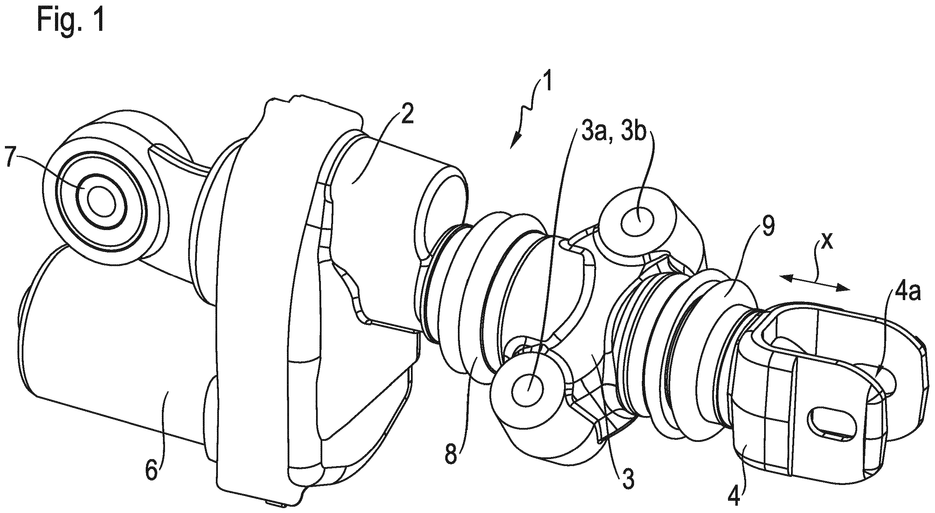

Fig. 1 zeigt in einer perspektivischen Darstellung eine Verstelleinrichtung 1, welche einen Aktuator 2, einen Lagerbock 3 sowie ein als Gabel 4 ausgebildetes Verbindungsglied 4 mit Durchbrüchen 4a umfasst. Der Aktuator 2 weist ein Gehäuse 5 auf, in welchem ein nicht dargestellter Spindelantrieb aufgenommen ist, welcher durch einen Elektromotor 6 antreibbar ist. Die Verstelleinrichtung 1 dient der Verstellung eines nicht dargestellten, beweglichen Fahrwerkteiles, vorzugsweise eines Spurlenkers einer Hinterachse eines Fahrzeugs und ist über ein als Gummilager 7 ausgebildetes Lager 7 am Fahrzeug, insbesondere einem nicht dargestellten Hilfsrahmen abgestützt. Der Lagerbock 3 weist zwei Befestigungsaugen 3a, 3b auf, über welche er am Fahrzeug abgestützt ist. Die Gabel 4, an welche über die Durchbrüche 4a der nicht dargestellte Spurlenker angelenkt ist, ist in Längsrichtung der Spindel, dargestellt durch einen Doppelpfeil X, verstellbar. Zwischen dem Aktuatorgehäuse 5 und dem Lagerbock 3 ist ein erster Faltenbalg 8 und zwischen dem Lagerbock 3 und der Gabel 4 ist ein zweiter Faltenbalg 9 zur Abdichtung angeordnet.

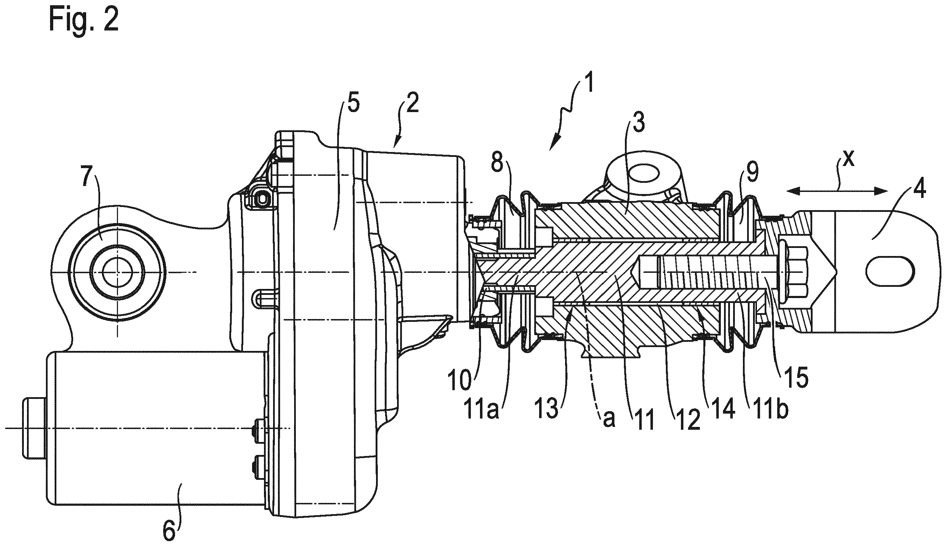

Fig. 2 zeigt die Verstelleinrichtung 1 in einer anderen Darstellung, wobei der Aktuator 2 mit Elektromotor 6 und Gummilager 7 in einer Seitenansicht und der Lagerbock 3 als Schnitt dargestellt sind. Die nur teilweise erkennbare Spindel 10 des Spindelantriebs des Aktuators 2 weist eine Längs- oder Spindelachse a auf und ist durch ein Verlängerungsstück 11 in Richtung der Spindelachse a verlängert. Das Verlängerungsstück 11, welches vorzugsweise kreiszylindrisch ausgebildet ist, weist einen Gewindezapfen 11a auf, welcher stirnseitig in die Spindel 10 eingeschraubt ist, so dass zwischen der Spindel 10 und dem Verlängerungsstück 11 eine feste, jedoch lösbare Verbindung hergestellt ist. Möglich, jedoch nicht dargestellt, sind auch unlösbare Verbindungen wie Verpressen oder Verschweißen. Der fahrzeugfeste Lagerbock 3 weist eine Durchgangsbohrung 12 auf, welche vom Verlängerungsstück 11 durchsetzt wird. In der Durchgangsbohrung 12 sind jeweils an den Stirnenden ein erstes Gleitlager 13 und ein zweites Gleitlager 14 angeordnet, über welche das Verlängerungsstück 11 gleitend im Lagerbock 3 geführt ist. Das Verlängerungsstück 11 ist an seinem äußeren Stirnende 11b, welches dem Aktuator 2 abgewandt ist, mit dem als Gabel 4 ausgebildeten Verbindungsglied 4 über einen Schraubbolzen 15, welcher in eine Gewindebohrung 16 im Verlängerungsstück 11 eingeschraubt ist, fest verbunden. Die Gabel 4 ist somit von der Spindel 10 über das Verlängerungsstück 11 in Verstellrichtung X verstellbar. Das Verlängerungsstück 11, der aus dem Gehäuse 5 austretende Teil der Spindel 10 sowie die beiden Gleitlager 13, 14 sind über den ersten Faltenbalg 8 und den zweiten Faltenbalg 9 gegen Verschmutzung von außen abgedichtet. Durch den Einsatz des Verlängerungsstückes 11 in Verbindung mit dem Lagerbock 3 wird eine Vergrößerung des Abstandes zwischen dem fahrzeugfesten Lagerpunkt 7 und dem fahrwerkseitigen Anlenkpunkt 4 erreicht. Kräfte und Momente, welche von dem beweglichen Fahrwerksteil auf die Gabel 4 und damit auf das Verlängerungsstück 11 übertragen werden, werden über den Lagerbock 3 am Fahrzeug abgestützt, so dass keine unzulässige Beanspruchung für das Verlängerungsstück 11 und dessen Verbindung mit der Spindel 10 auftritt.

Im Rahmen der Erfindung liegen auch in der Zeichnung nicht dargestellte alternative Ausführungsformen, bei welchen die Spindel einstückig mit dem Verlängerungsstück ausgebildet und/oder der Lagerbock mit dem Aktuatorgehäuse einstückig ausgebildet ist.

### Bezuaszeichen

- 1: Verstelleinrichtung
- 2: Aktuator
- 3: Lagerbock
- 3a: Befestigungsauge
- 3b: Befestigungsauge
- 4: Verbindungsglied/Gabel
- 4a: Durchbruch
- 5: Gehäuse
- 6: Elektromotor
- 7: Gummilager
- 8: erster Faltenbalg
- 9: zweiter Faltenbalg
- 10: Spindel
- 11: Verlängerungsstück
- 11a: Gewindezapfen
- 11b: äußeres Ende
- 12: Durchgangsbohrung
- 13: erstes Gleitlager
- 14: zweites Gleitlager
- 15: Schraubbolzen
- 16: Gewindebohrung

- a: Längsachse Spindel
- X: Verstellrichtung

## Patentansprüche

1. Verstelleinrichtung für eine Hinterachslenkung eines Fahrwerks eines Kraftfahrzeuges, umfassend einen Aktuator (2) mit einem Gehäuse (5) und einem Spindelantrieb, welcher eine axial verschiebbare Spindel (10) aufweist, mit einem fahrzeugseitigen Befestigungslager (7) und einem fahrwerkseitigen Verbindungsglied (4), **dadurch gekennzeichnet, dass** die Spindel (10) um ein Verlängerungsstück (11) in axialer Richtung (a) verlängert ist und welches mittels eines Führungselements (3) außerhalb des Gehäuses (5) des Aktuators am Fahrwerk abgestützt wird, um Kräfte und Momente abzufangen, welche zu einem Knicken des Verlängerungsstücks (11) führen können, wobei das Verbindungsglied (4) am äußeren Ende (11b) des Verlängerungsstücks (11) befestigt ist.

2. Verstelleinrichtung nach Anspruch 1, **dadurch gekennzeichnet, dass** das Verlängerungsstück (11) einstückig mit der Spindel (10) ausgebildet ist.

3. Verstelleinrichtung nach einem der Ansprüche von 1 bis 2, **dadurch gekennzeichnet, dass** das Verlängerungsstück (11) über ein Gleit- oder Schublager (13, 14) abgestützt ist.

4. Verstelleinrichtung nach Anspruch 3, **dadurch gekennzeichnet, dass** das Gleit- oder Schublager (13,14) als fahrzeugseitig befestigbarer Lagerbock (3) ausgebildet ist.

5. Verstelleinrichtung nach einem der Ansprüche 3 bis 4, **dadurch gekennzeichnet, dass** das Gleit- oder Schublager (13, 14) im Gehäuse (5) des Aktuators (2) angeordnet und das Gehäuse (5) im Bereich des Verlängerungsstücks (11) fahrzeugseitig abgestützt ist.

6. Verstelleinrichtung nach einem der Ansprüche 1 bis 5, **dadurch gekennzeichnet, dass** das Verlängerungsstück (11) mit der Spindel (10) lösbar oder unlösbar verbunden ausgebildet ist.

7. Hinterachslenkung mit einer Verstelleinrichtung nach einem der vorhergehenden Ansprüche.

## Claims

1. Adjusting device for a rear axle steering system of a chassis of a motor vehicle, comprising an actuator (2) with a housing (5) and a spindle drive which has an axially displaceable spindle (10), with a vehicle-side fastening bearing (7) and a chassis-side connecting member (4), **characterized in that** the spindle (10) is extended in the axial direction (a) by an extension piece (11), and which extension piece (11) is supported on the chassis by means of a guide element (3) outside the housing (5) of the actuator, in order to absorb forces and torques which can lead to buckling of the extension piece (11), the connecting member (4) being fastened to the outer end (11b) of the extension piece (11).

2. Adjusting device according to Claim 1, **characterized in that** the extension piece (11) is configured in one piece with the spindle (10).

3. Adjusting device according to either of Claims 1 and 2, **characterized in that** the extension piece (11) is supported via a plain or thrust bearing (13, 14).

4. Adjusting device according to Claim 3, **characterized in that** the plain or thrust bearing (13, 14) is configured as a bearing block (3) which can be fastened on the vehicle side.

5. Adjusting device according to either of Claims 3 and 4, **characterized in that** the plain or thrust bearing (13, 14) is arranged in the housing (5) of the actuator (2), and the housing (5) is supported on the vehicle side in the region of the extension piece (11).

6. Adjusting device according to one of Claims 1 to 5, **characterized in that** the extension piece (11) is connected releasably or non-releasably to the spindle (10) .

7. Rear axle steering system with an adjusting device according to one of the preceding claims.

## Revendications

1. Dispositif de réglage pour une direction d'essieu arrière d'un châssis de véhicule automobile, comprenant un actionneur (2) doté d'un carter (5) et d'un entraînement à vis à billes qui présente une vis axialement mobile (10), un palier de fixation (7) côté véhicule et un élément de raccordement (4) côté châssis, **caractérisé en ce que** la vis (10) est rallongée par une pièce de rallonge (11) dans la direction axiale (a), et ladite pièce de rallonge étant soutenue sur le châssis au moyen d'un élément de guidage (3) en dehors du carter (5) de l'actionneur pour absorber des forces et des moments susceptibles d'entraîner un flambage de la pièce de rallonge (11), l'élément de raccordement (4) étant fixé à l'extrémité extérieure (11b) de la pièce de rallonge (11).

2. Dispositif de réglage selon la revendication 1, **caractérisé en ce que** la pièce de rallonge (11) est réalisée d'un seul tenant avec la vis (10).

3. Dispositif de réglage selon l'une quelconque des revendications 1 à 2, **caractérisé en ce que** la pièce de rallonge (11) est soutenue par l'intermédiaire d'un palier lisse ou un palier de butée (13, 14).

4. Dispositif de réglage selon la revendication 3, **caractérisé en ce que** le palier lisse ou le palier de butée (13, 14) est réalisé sous la forme d'un support de palier (3) pouvant être fixé côté véhicule.

5. Dispositif de réglage selon l'une quelconque des revendications 3 à 4, **caractérisé en ce que** le palier lisse ou le palier de butée (13, 14) est disposé dans le carter (5) de l'actionneur (2) et le carter (5) est soutenu côté véhicule au niveau de la pièce de rallonge (11) .

6. Dispositif de réglage selon l'une quelconque des revendications 1 à 5, **caractérisé en ce que** la pièce de rallonge (11) est réalisée en étant reliée à la vis (10) de manière amovible ou non amovible.

7. Direction d'essieu arrière comprenant un dispositif de réglage selon l'une quelconque des revendications précédentes.
